# EUROPEAN PATENT APPLICATION

(11) **EP 4 435 958 A1**
(43) Date of publication of application: **25.09.2024**
(21) Application number: 23857620.1
(22) Date of filing: 10.08.2023
(51) Int. Cl.: H01M 50/507, H01M 50/569, H01M 50/519, H01M 50/211

(54) **BATTERY MODULE AND BATTERY PACK INCLUDING SAME**

(30) Priority: 26.08.2022 KR 20220107418
(71) Applicant: LG Energy Solution, Ltd., Seoul 07335 (KR)
(72) Inventor: UHM, Jae Yong, Daejeon 34122 (KR)
(74) Representative: Plasseraud IP
(86) International application number: PCT/KR2023/011802
(87) International publication number: WO 2024/043586

(57) **Abstract**

A battery module according to one embodiment of the present disclosure includes a battery cell stack in which battery cells having electrode leads protruding in in either one or both directions are stacked; a busbar frame located on one side of the battery cell stack; a busbar and a sensing member mounted on the busbar frame; and a metal wire that connects the busbar and the sensing member, wherein: the busbar includes a first metal layer located on a surface facing the busbar frame, and a second metal layer located on a surface opposite to a surface that faces the busbar frame, the electrode lead passes through a slit formed in the busbar frame, and then is bent and joined to the second metal layer, and one region of the metal wire is joined to the first metal layer, and the other region of the metal wire is connected to the sensing member.

## Description

### [TECHNICAL FIELD]

### Cross Citation with Related Application(s)

This application claims the benefit of Korean Patent Application No. 10-2022-0107418 filed on August 26, 2022 in the Korean Intellectual Property Office, the disclosure of which is incorporated herein by reference in its entirety.

The present disclosure relates to a battery module and a battery pack including the same, and more particularly, a battery module that improves manufacturing process efficiency and reduces costs, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are disposed with a separator being interposed therebetween, and an exterior material, i.e., a battery case, that seals and houses the electrode assembly together with the electrolyte.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. One or more battery modules can be mounted together with various control and protection systems such as a battery management system (BMS), a battery disconnect unit (BDU), and a cooling system to form a battery pack.

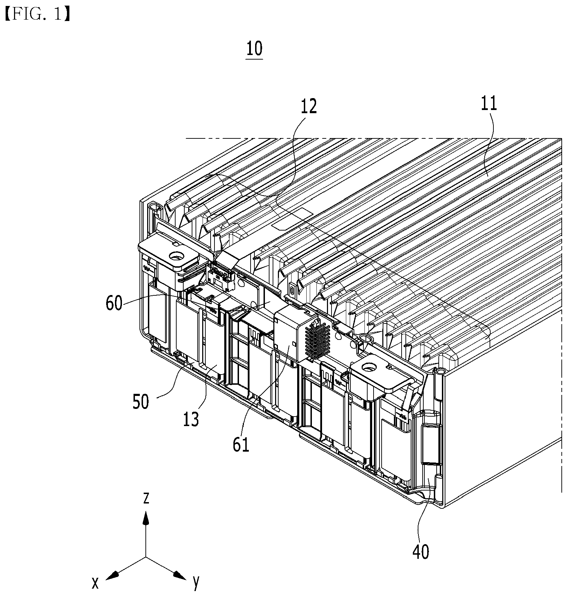

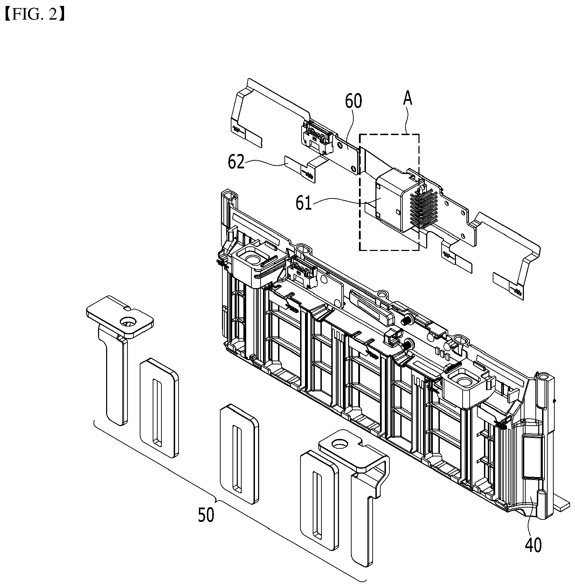

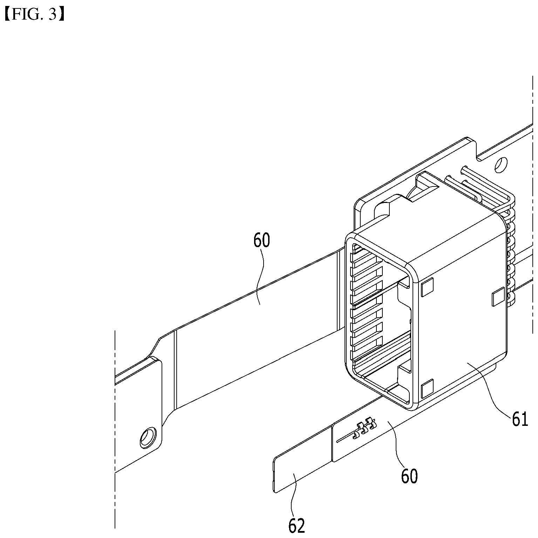

FIG. 1 is a partial perspective view showing a conventional battery module. FIG. 2 is an exploded perspective view showing a busbar, a busbar frame, and a sensing member included in the battery module of FIG. 1. FIG. 3 is a partial perspective view which enlarges and shows a section "A" of FIG. 2.

Referring to FIGS. 1 to 3, a conventional battery module 10 includes a battery cell stack 12 including a plurality of battery cells 11. The battery cell stack 12 can be housed inside the module frame, and for convenience of explanation, illustration of the module frame is omitted. A plurality of battery cells 11 are stacked in one direction, and a busbar 50 and a busbar frame 40 are disposed on one side of the battery cell stack 12 to electrically connect the battery cells 11.

Specifically, the busbar frame 40 may be located in the direction in which the electrode leads 13 of the battery cells 11 are located in the battery cell stack 12. A busbar 50 including a metal material may be mounted on such a busbar frame 40. The electrode leads 13 of the battery cells 11 may be weld-joined to the busbar 50. The electrode leads 13 of the battery cells 11 may be joined to the busbar 50, and electrically connected to each other in series or in parallel.

The battery module 10 may include a sensing member 60. Voltage information of the battery cells 11 within the battery module 10 may be transmitted to an external battery management system (BMS) via such a sensing member 60.

Specifically, the sensing member 60 includes an FFC (flat flexible cable), a PCB (printed circuit board), or an FPCB (flexible printed circuit board), wherein a module connector 61 may be connected to a sensing member 60, and a joining member 62 may be connected to one end of the sensing member 60. The plate-shaped joining member 62 may be joined to the busbar 50 to which the electrode lead 13 is joined by a welding method. Voltage information of each battery cell 11 may be transmitted to an external battery management system via the busbar 50, the joining member 62, the sensing member 60, and the module connector 61. The battery management system monitors and controls the condition of each battery cell 11 based on this.

At this time, in the conventional battery module 10, junction is performed using welding between the joining member 62 and the busbar 50, in which case there are problems that automation of the manufacturing process is difficult, the rework of junction is difficult, and non-destructive testing is impossible.

### [DETAILED DESCRIPTION OF THE INVENTION]

### [Technical Problem]

It is an object of the present disclosure to provide a battery module that enables automation of the manufacturing process, rework of junction, and non-destructive testing in the connection between the sensing member and the busbar, and a battery pack including the same.

However, the technical problems to be solved by embodiments of the present disclosure are not limited to the above-described problems, and can be variously expanded within the scope of the technical idea included in the present disclosure.

### [Technical Solution]

According to one embodiment of the present disclosure, there is provided a battery module comprising: a battery cell stack in which battery cells having electrode leads protruding in in either one or both directions are stacked; a busbar frame located on one side of the battery cell stack; a busbar and a sensing member mounted on the busbar frame; and a metal wire that connects the busbar and the sensing member, wherein the busbar includes a first metal layer located on a surface facing the busbar frame, and a second metal layer located on a surface opposite to a surface that faces the busbar frame, wherein the electrode lead passes through a slit formed in the busbar frame, and then is bent and joined to the second metal layer, and wherein one region of the metal wire is joined to the first metal layer, and the other region of the metal wire is connected to the sensing member.

The metal wire and the busbar may be configured to be joined by wire bonding.

The sensing member may include a FFC (flat flexible cable), a PCB (printed circuit board), or a FPCB (flexible printed circuit board).

The first metal layer may include an aluminum material, and the second metal layer may include a copper material.

The metal wire may include an aluminum material.

A curved bending part may be formed on one side of the busbar. In the bending part, the first metal layer may be exposed to a surface opposite to a surface that faces the busbar frame.

The metal wire may be joined to a portion exposed by the bending part among the first metal layer.

A through hole is formed in the second metal layer, and the first metal layer may be exposed to a surface opposite to a surface that faces the busbar frame via the through hole.

The metal wire may be joined to a portion exposed through the through hole among the first metal layer.

The busbar may have a plate shape, the first metal layer may have a thickness of 85% to 90% relative to the thickness of the busbar, and the second metal layer may have a thickness of 10% to 15% relative to the thickness of the busbar.

The battery cell is a pouch-type battery cell, and the battery cells may be stacked in an upright state to form the battery cell stack.

According to another embodiment of the present disclosure, there is provided a battery pack comprising the battery module.

### [Advantageous Effects]

According to embodiments of the present disclosure, by applying a joining method using a metal wire when connecting between the sensing member and the busbar, automation of manufacturing processes, rework of junction, and non-destructive testing are all possible.

Additionally, by including both copper material and aluminum material in the busbar, material costs can be reduced.

The effects of the present disclosure are not limited to the effects mentioned above, and additional other effects not mentioned above will be clearly understood from the description of claims by those skilled in the art.

### [BRIEF DESCRIPTION OF THE DRAWINGS]

FIG. 1 is a partial perspective view showing a conventional battery module;
FIG. 2 is an exploded perspective view showing a busbar, a busbar frame, and a sensing member included in the battery module of FIG. 1;
FIG. 3 is a partial perspective view which enlarges and shows a section "A" of FIG. 2;
FIG. 4 is an exploded perspective view showing a battery module according to an embodiment of the present disclosure;
FIG. 5 is a diagram showing one of the battery cells included in the battery module of FIG. 4;
FIG. 6 is a perspective view showing a busbar frame, a busbar, a sensing member, and the like included in the battery module of FIG. 4;
FIG. 7 is an exploded perspective view showing the busbar frame, busbar, sensing member, and the like in FIG. 6;
FIG. 8 is a diagram showing a busbar according to an embodiment of the present disclosure;
FIG. 9 is a partial perspective view which enlarges and shows a section "B" of FIG. 6;
FIG. 10 is a partial view which enlarges and shows the connection form between the busbar and metal wire in FIG. 9;
FIG. 11 is a perspective view showing a busbar frame, a busbar, a sensing member, and the like according to another embodiment of the present disclosure; and
FIG. 12 is a diagram showing the busbar of FIG. 11.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is observed from the side of the vertically cut cross-section.

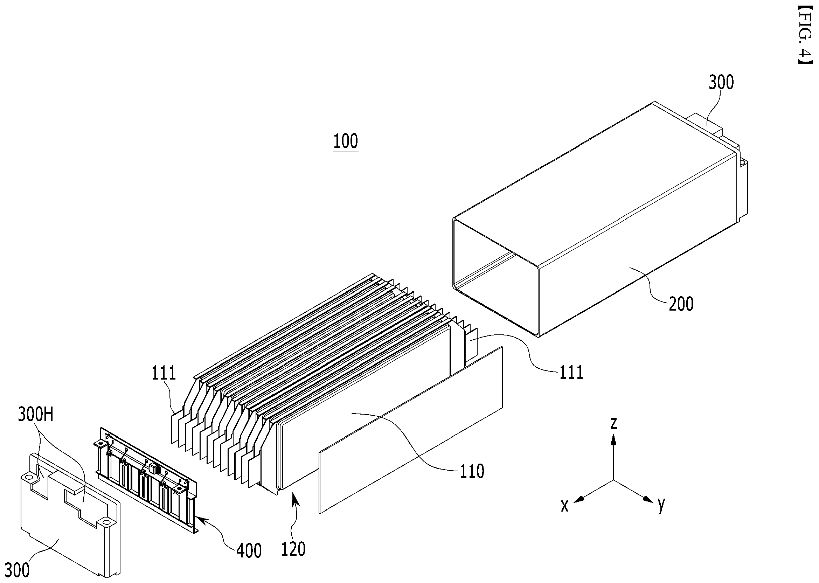

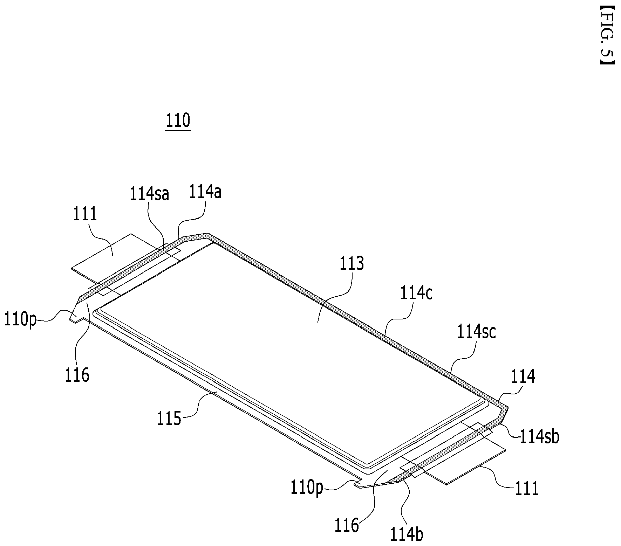

FIG. 4 is an exploded perspective view showing a battery module according to an embodiment of the present disclosure. FIG. 5 is a diagram showing one of the battery cells included in the battery module of FIG. 4.

Referring to FIGS. 4 and 5, the battery module 100 according to an embodiment of the present disclosure includes a battery cell stack 120 in which battery cells 110 are stacked and a busbar frame 400 located on one side of the battery cell stack 120.

First, the battery cell 110 is preferably a pouch-type battery cell, and can be formed in a rectangular sheet-like structure. The battery cell 110 according to the present embodiment has electrode leads 111 that protrude in in either one or both directions. As an example, FIG. 5 illustrates a structure in which two electrode leads 111 face each other and protrude from one end 114a and the other end 114b of the cell main body 113, respectively. More specifically, the electrode leads 111 are connected to an electrode assembly (not shown), and are protruded from the electrode assembly (not shown) to the outside of the battery cell 110. Although not specifically shown, a battery cell in which two electrode leads 111 protrude in the same direction is also possible as an embodiment of the present disclosure.

On the other hand, the battery cell 110 can be produced by joining both ends 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat-sealing, and the remaining other side part may be composed of a folding part 115. It can form a structure in which the cell case 114 is folded in the folding part 115. The cell case 114 may be composed of a laminated sheet including a resin layer and a metal layer.

Further, the folding part 115 may extend long along one edge of the battery cell 110, and a protrusion 110p of the battery cell 110 called a bat-ear can be formed at an end part of the folding part 115. However, the protrusion 110p is an exemplary structure, and in another embodiment of the present disclosure, the battery cell 110 may have a configuration in which no protrusion is formed and the folding part 115 extends in a straight line.

Further, while the cell case 114 is sealed, with the protruding electrode leads 111 being interposed therebetween, a terrace part 116 may be formed between the electrode leads 111 and the cell main body 113. That is, the battery cell 110 includes a terrace part 116 formed to extend from the cell main body 113 in the direction in which the electrode leads 111 protrude.

Such a battery cell 110 may be composed by a plurality of numbers, and the plurality of battery cells 110 may be stacked so as to be electrically connected to each other, thereby forming a battery cell stack 120. Particularly, as shown in FIG. 4, a plurality of battery cells 110 may be stacked in an upright state along a direction parallel to the y-axis so as to make one side surfaces of the cell main body 113 face each other. Thereby, the electrode leads 111 may protrude in a direction perpendicular to the direction in which the battery cells 110 are stacked. That is, in the battery cell 110, one electrode lead 111 may protrude toward the x-axis direction, and the other electrode lead 111 may protrude toward the -x-axis direction. If the electrode leads 111 are battery cells that protrude only in one direction, the electrode leads 111 protrude in the x-axis direction or the -x-axis direction.

On the other hand, the battery module 100 according to the present embodiment may include a module frame 200 and an end plate 300 that form an internal space in which the battery cell stack 120 is housed.

The module frame 200 may be a structure in which one surface and the other surface opposite to the one surface are opened. More specifically, the module frame 200 may be opened in both directions where the electrode leads 111 protrude with respect to the battery cell stack 120. In an embodiment of the present disclosure, the module frame 200 may be in the form of a mono frame integrated with the upper surface, the lower surface and both side surfaces. Further, in another embodiment of the present disclosure, the module frame 200 may include a U-shaped frame that covers the lower surface and both side surfaces of the battery cell stack 120 and an upper cover that covers the upper surface of the battery cell stack 120. The U-shaped frame and the upper cover may be joined with corresponding edges to form a module frame 200. The joining method is not particularly limited, and weld-joining may be performed as an example.

The end plate 300 may be composed by a plurality of numbers, and may cover the one open surface and the other open surface of the module frame 200, respectively. The battery cell stack 120 is housed in the internal space formed by the module frame 200 and the end plate 300, so that the battery cell stack 120 can be physically protected. For this purpose, the module frame 200 and the end plate 300 may include a metal material with a predetermined strength. On the other hand, the module frame 200 and the end plate 300 may be joined by a method such as welding in a state where their corresponding edge portions are in contact with each other.

Next, the busbar frame, the busbar, and the sensing member according to the present embodiment will be described in detail.

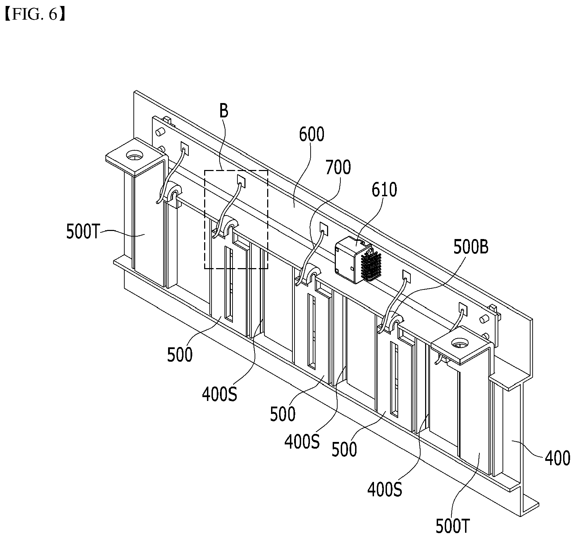

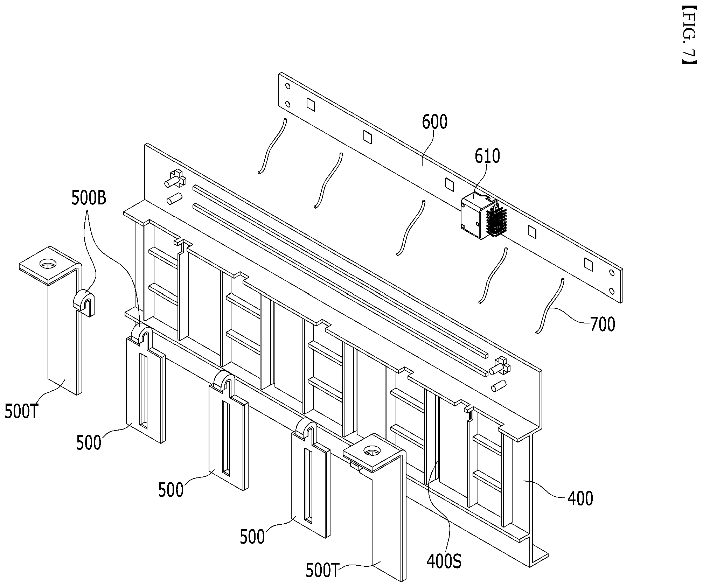

FIG. 6 is a perspective view showing a busbar frame, a busbar, a sensing member, and the like included in the battery module of FIG. 4. FIG. 7 is an exploded perspective view showing the busbar frame, busbar, sensing member, and the like in FIG. 6.

Referring to FIGS. 4 to 7 together, the busbar frame 400 according to the present embodiment is located on one side of the battery cell stack 120. Specifically, the busbar frame 400 may be located on one side in the direction in which the electrode lead 111 protrudes in the battery cell stack 120. In FIG. 4, only the case where one busbar frame 400 is located on one side of the battery cell stack 120 is illustrated, but another busbar frame may be further located on the opposite side with respect to the battery cell stack 120. That is, a total of two busbar frames 400 may be disposed on both sides of the battery cell stack 120, respectively.

The battery module 100 according to the present embodiment includes a busbar 500 and a sensing member 600 mounted on the busbar frame 400. Further, the battery module 100 includes a metal wire 700 that connects the busbar 500 and the sensing member 600.

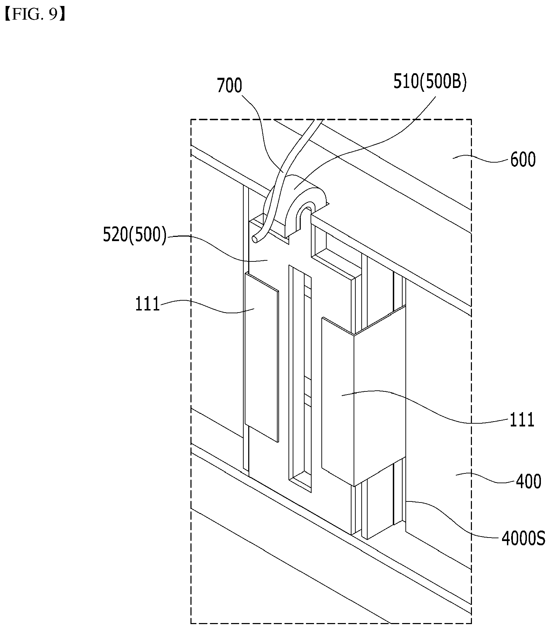

The busbar 500 is for electrically connecting the battery cells 110 within the battery module 100, and preferably includes a metal material to enable electrical connection. The busbar 500 may be mounted on a surface opposite to a surface that faces the battery cell stack 120 among the busbar frame 400. The electrode leads 111 protruding from the battery cells 110 may pass through a slit 400S formed in the busbar frame 400, and then be bent and connected to the busbar 500. More specifically, one electrode lead 111 may pass through a slit 400S of the busbar frame 400 located on one side of the battery cell stack 120, and then be bent and connected to the busbar 500, and the other electrode lead 111 may pass through a slit in the busbar frame (not shown) located on the other side of the battery cell stack 120, and then be connected to the busbar 500. The connection method between the electrode lead 111 and the busbar 500 is not particularly limited, but weld-joining may be performed as an example. The connection between the electrode lead 111 and the busbar 500 will be described again with reference to FIG. 9.

By connecting the electrode leads 111 of the battery cells 110 to the busbar 500 as described above, electrical series or parallel connection between the battery cells 110 can be realized.

On the other hand, the busbar frame 400 preferably includes an electrically insulating material in order to prevent the busbar 500 and other electrical components from coming into contact with parts other than the electrode lead 111 of the battery cell 110 and causing a short circuit. As an example, the busbar frame 400 may be an injection-molded plastic product.

On the other hand, the busbar frame 400 may be equipped with a terminal busbar 500T in addition to the busbar 500. Similar to the busbar 500, the terminal busbar 500T may be mounted on a surface opposite to a surface that faces the battery cell stack 120 among the busbar frame 400, and the electrode leads 111 may pass through a slit 400S formed in the busbar frame 400, and then be bent and connected to the terminal busbar 500T. The terminal busbar 500T is generally similar to the busbar 500, but unlike the busbar 500, it has a part exposed to the outside. As an example, a terminal opening hole 300H (see FIG. 4) may be formed in the end plate 300, and the upwardly extending portion of the terminal busbar 500T may pass through the terminal opening hole 300H and be exposed to the outside of the battery module 100.

The terminal busbar 500T functions as an input/output terminal of the battery module 100 for HV (High Voltage) connection. HV connection refers to an electrical connection that requires relatively high voltage, such as the input/output terminal of a battery module. The battery module 100 according to the present embodiment can be connected to other battery module or a battery disconnect unit (BDU) that controls the electrical connection of the battery module through the exposed portion of the terminal busbar 500T.

The sensing member 600 is a member for LV (Low Voltage) connection of the battery module 100. The LV connection refers to electrical connections that require relatively low voltage, such as battery electrical components. As an example, the sensing member 600 senses voltage data or temperature data of the battery cells 110 included in the battery module 100, and transmits the sensed voltage data or temperature data to a battery management system (BMS) located outside the battery module 100. The battery management system manages the voltage or temperature of the corresponding battery module 100 based on the transmitted voltage or temperature data.

In order to sense the voltage data of the battery cell 110, the sensing member 600 is electrically connected to the busbar 500 to which the electrode lead 111 is connected via a metal wire 700, which will be described later. Similar to the busbar 500, the sensing member 600 may be mounted on a surface opposite to a surface that faces the battery cell stack 120 among the busbar frame 400, and can be mounted in the upper region of the busbar frame 400. This sensing member 600 may include a FFC (flat flexible cable), a PCB (printed circuit board), or a FPCB (flexible printed circuit board).

A module connector 610 may be connected to the sensing member 600. The module connector 610 is a member exposed to the outside of the battery module 100, and is connected to a battery management system (BMS) located outside the battery module 100, so that voltage data or temperature data measured by sensing member 600 can be transmitted to a battery management system.

As described above, the electrode lead 111 is joined to the busbar 500, and a metal wire 700 connects the busbar 500 and the sensing member 600. Specifically, one region of the metal wire 700 is connected to the busbar 500, and the other region of the metal wire 700 is connected to the sensing member 600.

At this time, the metal wire 700 and the busbar 500 may be configured to be joined by wire bonding. The wire bonding is a bonding method mainly used in the semiconductor manufacturing process, and refers to a method of connecting an integrated circuit and a terminal with a thin wire made of metal. In other words, the wire bonding refers to a technique that uses metal wires and creates electrical interconnections with a combination of ultrasonic energy and pressure.

On the other hand, the connection method between the metal wire 700 and the sensing member 600 is not particularly limited as long as electrical connection is possible therebetween.

Similar to FIGS. 2 and 3, when connecting the sensing member 60 and the busbar 50 in a conventional battery module 10, a method was used in which a joining member 62, which is a plate-shaped metal member, is welded to the busbar 50. In particular, resistance welding, ultrasonic welding, or laser welding were applied. On the other hand, in the battery module 100 according to the present embodiment, wire bonding using a metal wire 700 is applied when connecting the sensing member 600 and the busbar 500. Below, the advantages of the battery module 100 of the present disclosure over the conventional battery module 10 will be described from the viewpoints of automation of the manufacturing process, rework of junction, and non-destructive testing.

First, in the process of joining between the joining member 62 and the busbar 50 of the conventional battery module 10, there must be no gap between the joining member 62 and the busbar 50 to ensure the strength of the welded joint. In order to eliminate the gap, clamping work on the sensing member 60 is first performed, but due to the flexible nature of the sensing member 60, it is difficult to secure the sensing member 60 during a clamping operation. Therefore, the clamping work is difficult to automate and must be performed manually. On the other hand, when using the metal wire 700 as in the present embodiment, the two connection objects can be joined even if they are at different lengths, different directions, and different heights, so the conventional gap problem can be solved, and automation of the manufacturing process is possible.

Next, when a weld-joining such as laser welding is applied between the joining member 62 and the busbar 50, chemical deformation occurs in both metal materials. Therefore, when rework is performed, welding must be performed in other regions of the jointing member 62 that has not been welded, and since the region is not large, rework is not easy. On the other hand, in the case of wire bonding using a metal wire 700, rework is easy because no chemical reaction occurs on the surface of the metal material. Further, in the case of wire bonding, there is an advantage that rework can be performed if only a very narrow region can be secured.

Finally, when a weldjoining such as laser welding is applied between the joining member 62 and the busbar 50, the strength of the welded portion should be evaluated through destructive testing. On the other hand, in the case of wire bonding using the metal wire 700, wire bonding is performed, and at the same time, a predetermined force is applied to the metal wire 700, thereby making it possible to evaluate the bonding strength in a non-destructive state. Even if only a small force is applied to the metal wire 700 compared to the strength at which the metal wire 700 breaks, strength evaluation can be performed. This non-destructive testing allows for complete monitoring of the joints in real time during the process.

Below, a specific form of the busbar according to the present embodiment will be described in detail.

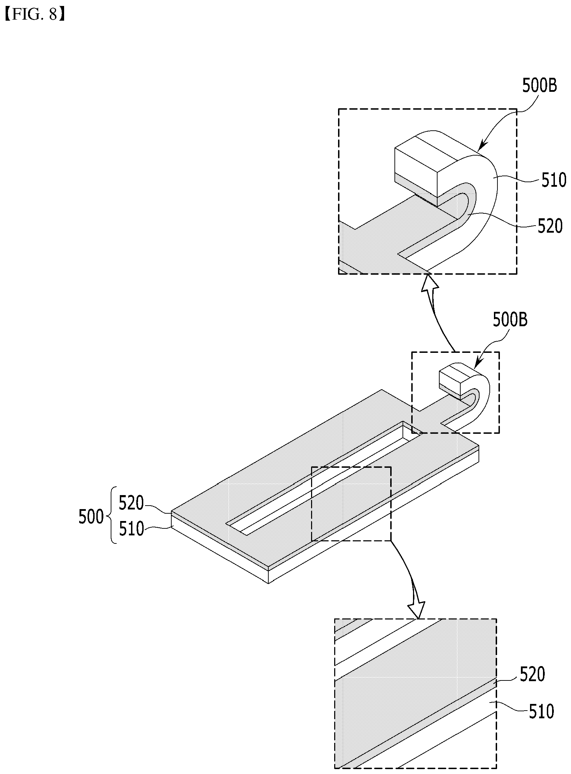

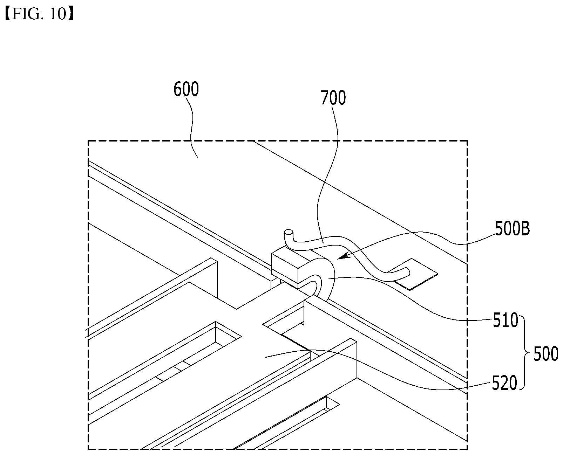

FIG. 8 is a diagram showing a busbar according to an embodiment of the present disclosure. FIG. 9 is a partial perspective view which enlarges and shows a section "B" of FIG. 6. FIG. 10 is a partial view which enlarges and shows the connection form between the busbar and metal wire in FIG. 9. However, for convenience of explanation, FIG. 9 shows a state of the electrode lead 111 bent after passing through the slit 400S of the busbar frame 400.

Referring to FIGS. 8 to 10 together with FIGS. 4 and 6, the busbar 500 according to the present embodiment includes a first metal layer 510 located on a surface facing the busbar frame 400 and a second metal layer 520 located on a surface opposite to a surface that faces the busbar frame 400. In FIG. 8, the second metal layer 520 is shown by shaded parts to facilitate distinction.

The electrode lead 111 of the battery cell 110 passes through a slit 400S formed in the busbar frame 400, and then is bent and joined to the second metal layer 520. The metal wire 700 is joined to the first metal layer 510. That is, one region of the metal wire 700 is joined to the first metal layer 510, and the other region of the metal wire 700 is connected to the sensing member 600.

The first metal layer 510 may include an aluminum material, and the second metal layer 520 may include a copper material. Specifically, the busbar 500 according to the present embodiment may be a clad member in which the first metal layer 510 and the second metal layer 520 are joined by rolling. As an example, the first metal layer 510 containing an aluminum material and the second metal layer 520 containing a copper material, that is, the first and second metal layers 510 and 520 made of mutually different materials are joined to each other by rolling, so that a busbar 500 according to the present embodiment can be provided. Here, clad joining for manufacturing a clad member refers to a technique of using a metal or non-metal as a base layer and joining the other metal to one surface of the base layer by rolling. This is a joining technique that allows the characteristics of each material to appear at the same time. That is, the first metal layer 510 and the second metal layer 520 can be joined to each other using a clad bonding technique to form the busbar 500 according to the present embodiment. The busbar 500 is mounted on the busbar frame 400 such that the first metal layer 510 faces the busbar frame 400 and the second metal layer 520 does not face the busbar frame 400.

The second metal layer 520 is a region to which the electrode lead 111 that has passed through the slit 400S is bent and then joined. Since the capacity of battery cells gradually increases and charging time shortens, controlling the heat generation of battery cells is an important issue. In the case of copper, since it has excellent thermal and electrical conductivity, the degree of heat dissipation is excellent when applied to the busbar 500, which can improve the cooling performance of the battery module 100, and reduce the resistance in electrical connection with the electrode lead 111. That is, a copper material may be included in the second metal layer 520 of the busbar 500 in order to increase the degree of heat dissipation of the busbar 500 and reduce the resistance.

On the other hand, a conventional busbar 50 may be constituted of a single layer of copper material. However, copper has excellent thermal and electrical conductivity, but has the disadvantage of being slightly expensive. Therefore, in the present embodiment, the busbar 500 is not constituted of a single layer of copper material, but is configured to include a first metal layer 510 and a second metal layer 520. Since the aluminum material included in the first metal layer 510 is about 3 to 4 times cheaper than the copper material included in the second metal layer 520, material costs can be reduced. Taken together, in order to simultaneously satisfy improvement of cooling performance, reduction of resistance, and reduction of costs, the busbar 500 according to the present embodiment was designed to include a first metal layer 510 containing an aluminum material and a second metal layer 520 containing a copper material.

At this time, in the plate-shaped busbar 500, the first metal layer 510 containing an aluminum material may have a thickness of 85% or more and 90% or less relative to the thickness of the busbar 500, and the second metal layer 520 containing a copper material may have a thickness of 10% or more and 15% or less relative to the thickness of the bus bar 500.

When the thickness of the first metal layer 510 is less than 85% and the thickness of the second metal layer 520 is more than 15% relative to the thickness of the busbar 500, the manufacturing cost of the busbar 500 may be too high compared to the desired degree of heat dissipation of the busbar 500.

Further, when the thickness of the first metal layer 510 is greater than 90% and the thickness of the second metal layer 520 is less than 10% relative to the thickness of the busbar 500, the extent of heat dissipation of the busbar 500 is insufficient, and thus, the battery module 100 may fail to satisfy the cooling performance standards.

On the other hand, the metal wire 700 according to the present embodiment may include an aluminum material. That is, the metal wire 700 may include the same material as the material of the first metal layer 510 to which the metal wire 700 is joined. Aluminum material is widely used in the process of manufacturing battery modules and has the advantage of being inexpensive. Therefore, aluminum can be used as a material for the metal wire 700 for wire bonding.

In wire bonding between the metal wire 700 and the busbar 500, the bonding performance improves if the same materials are joined to each other, whereby the metal wire 700 containing an aluminum material was designed to be joined to a first metal layer 510 containing aluminum material.

However, because the second metal layer 520 must be joined to the electrode lead 111, the second metal layer 520 is located on the surface opposite to the side that faces the busbar frame 400. The first metal layer 510 is located on the surface facing the busbar frame 400, in which case it may be difficult to join the first metal layer 510 and the metal wire 700 due to locational limitations.

Therefore, in the present embodiment, a curved bending part 500B was formed on one side of the busbar 500. In this bending part 500B, the first metal layer 510 may be exposed to the surface opposite to the surface that faces the busbar frame 400. The bending part 500B may be a portion where both the first metal layer 510 and the second metal layer 520 of the busbar 500 are extended while being curved.

As shown in FIGS. 9 and 10, the metal wire 700 may be joined to a portion of the first metal layer 510 exposed by the bending part 500B. In the present embodiment, the first metal layer 510 is included in the busbar 500 to reduce material costs and at the same time form a bending part 500B, so that the metal wire 700 is easily joined to the first metal layer 510 to thereby ensure manufacturing process performance.

The position of the bending part 500B is not particularly limited, but it is preferably located close to the sensing member 600. In one example, a bending part 500B may be formed on the upper part of the busbar 500. In addition, as shown in FIGS. 6 and 7, a bending part 500B may be formed not only on the busbar 500 but also on the terminal busbar 500T, and the metal wire 700 may be joined to the first metal layer 510 of the bending portion 500B of the terminal busbar 500T.

Next, a busbar according to another embodiment of the present disclosure will be described. However, descriptions of parts that overlap with those described above will be omitted.

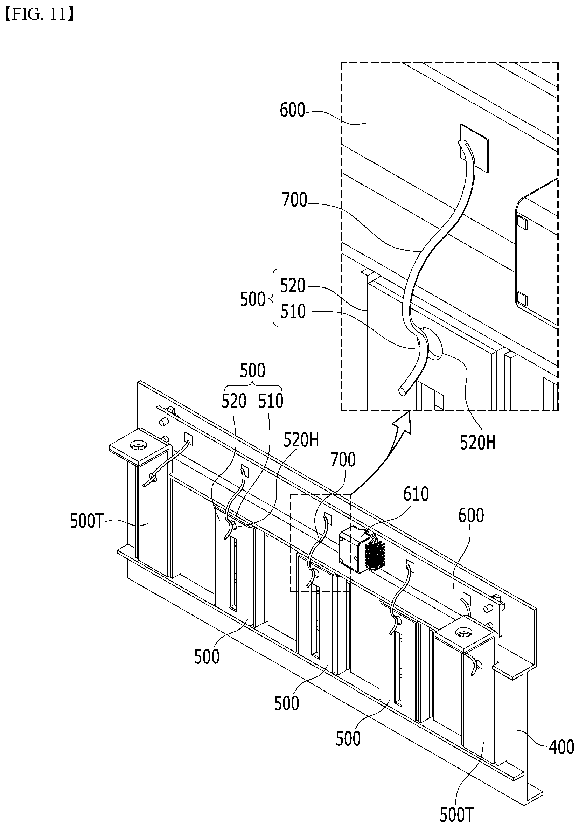

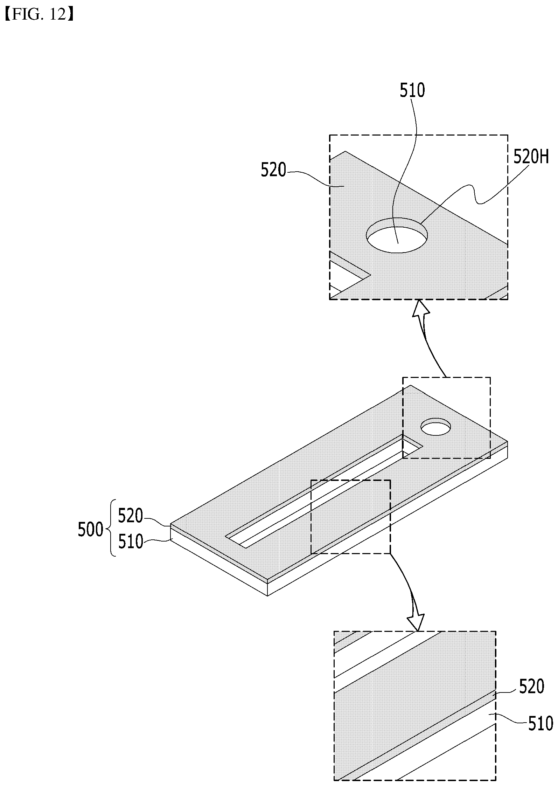

FIG. 11 is a perspective view showing a busbar frame, a busbar, a sensing member, and the like according to another embodiment of the present disclosure. FIG. 12 is a diagram showing the busbar of FIG. 11. In FIG. 12, the second metal layer 520 is shown by shaded parts to facilitate distinction.

Referring to FIGS. 11 and 12, the busbar 500 and the sensing member 600 may be mounted on the busbar frame 400 according to another embodiment of the present disclosure. A metal wire 700 may connect the busbar 500 and the sensing member 600. A terminal busbar 500T can be mounted on the busbar frame 400, and the sensing member 600 may be connected to the module connector 610.

Further, the busbar 500 includes a first metal layer 510 located on the surface facing the busbar frame 400 and a second metal layer 520 located on the surface opposite to the surface that faces the busbar frame 400. The electrode lead 111 of the battery cell 110 passes through a slit formed in the busbar frame 400, and then is bent and joined to the second metal layer 520.

Up to this point, it is similar to the structure of the busbar described previously in FIGS. 8 to 10. However, the busbar 500 according to the present embodiment differs in that a through hole 520H is formed in the second metal layer 520 instead of the bending part.

Specifically, a through hole 520H may be formed in the second metal layer 520, and the first metal layer 510 may be exposed to the surface opposite to the surface that faces the busbar frame 400 through this through hole 520H. The metal wire 700 may be joined to a portion exposed through the through hole 520H among the first metal layer 510. In the present embodiment, the first metal layer 510 is included in the busbar 500 to save material costs, and the second metal layer 520 is formed with a through hole 520H, so that the metal wire 700 can be easily connected to the first metal layer 510, thereby ensuring manufacturing process performance.

The position of the through hole 520H is not particularly limited, but it is preferably located close to the sensing member 600. In one example, a through hole 520H may be formed in the upper region of the busbar 500. Further, as shown in FIG. 11, a through hole 520H may be formed not only in the busbar 500 but also in the terminal busbar 500T, and the metal wire 700 may be bonded to the first metal layer 510 exposed through the through hole 520H of the terminal busbar 500T.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a battery management system (BMS), a battery disconnect unit (BDU), and a cooling system to form a battery pack.

The battery module or the battery pack can be applied to various devices. Specifically, it can be applied to vehicle means such as an electric bike, an electric vehicle, and a hybrid electric vehicle, or an ESS (energy storage system) and may be applied to various devices capable of using a secondary battery, without being limited thereto.

The invention has been described in detail with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: battery module
110: battery cell
120: battery cell stack
400: busbar frame
500: busbar
500B: bending part
510: first metal layer
520: second metal layer
520H: through hole
600: sensing member
700: metal wire

## Claims

1. A battery module comprising:
a battery cell stack in which battery cells having electrode leads protruding in in either one or both directions are stacked;
a busbar frame located on one side of the battery cell stack;
a busbar and a sensing member mounted on the busbar frame; and
a metal wire that connects the busbar and the sensing member,
wherein the busbar includes a first metal layer located on a surface facing the busbar frame, and a second metal layer located on a surface opposite to a surface that faces the busbar frame,
wherein the electrode lead passes through a slit formed in the busbar frame, and then is bent and joined to the second metal layer, and
wherein one region of the metal wire is joined to the first metal layer, and the other region of the metal wire is connected to the sensing member.

2. The battery module of claim 1, wherein:
the metal wire and the busbar are configured to be joined by wire bonding.

3. The battery module of claim 1, wherein:
the sensing member includes a FFC (flat flexible cable), a PCB (printed circuit board), or a FPCB (flexible printed circuit board).

4. The battery module of claim 1, wherein:
the first metal layer includes an aluminum material, and the second metal layer includes a copper material.

5. The battery module of claim 4, wherein:
the metal wire includes an aluminum material.

6. The battery module of claim 1, wherein:
a curved bending part is formed on one side of the busbar, and
in the bending part, the first metal layer is exposed to a surface opposite to a surface that faces the busbar frame.

7. The battery module of claim 6, wherein:
the metal wire is joined to a portion exposed by the bending part among the first metal layer.

8. The battery module of claim 1, wherein:
a through hole is formed in the second metal layer, and the first metal layer is exposed to a surface opposite to a surface that faces the busbar frame via the through hole.

9. The battery module of claim 8, wherein:
the metal wire is joined to a portion exposed through the through hole among the first metal layer.

10. The battery module of claim 1, wherein:
the busbar has a plate shape,
the first metal layer has a thickness of 85% to 90% relative to the thickness of the busbar, and
the second metal layer has a thickness of 10% to 15% relative to the thickness of the busbar.

11. The battery module of claim 1, wherein:
the battery cell is a pouch-type battery cell, and
the battery cells are stacked in an upright state to form the battery cell stack.

12. A battery pack comprising the battery module of claim 1.
